Europäisches Patentamt

European Patent Office

Office européen des brevets

(11) Veröffentlichungsnummer: **0 226 877**

**A2**

(12) **EUROPÄISCHE PATENTANMELDUNG**

(21) Anmeldenummer: **86116608.0**

(22) Anmeldetag: **28.11.86**

(51) Int. Cl.⁴: **G 11 B 20/10**
**G 11 B 27/32**
**//G11B5/008**

(30) Priorität: **21.12.85 DE 3545601**

(43) Veröffentlichungstag der Anmeldung:
**01.07.87 Patentblatt 87/27**

(84) Benannte Vertragsstaaten:
**AT BE CH DE FR GB IT LI NL SE**

(71) Anmelder: **General Service Electronics GmbH**
**Kostheimer Landstrasse 36**
**D-6502 Mainz-Kostheim(DE)**

(72) Erfinder: **Roggendorf, Peter, Dipl.-Ing.**
**Friedrichstrasse 17**
**D-6500 Mainz(DE)**

(74) Vertreter: **Knoblauch, Ulrich, Dr.-Ing.**
**Kühhornshofweg 10**
**D-6000 Frankfurt am Main 1(DE)**

(54) **Verfahren zur Übertragung von Bitsignalen, Bitsignalgeber und Bitsignalempfänger zur Durchführung des Verfahrens sowie nach dem Verfahren bespielter Aufzeichnungsträger.**

(57) Bei einem Verfahren zur Übertragung von Bitsignalen ist jedes Bitsignal durch eine geringe Zahl von Vollwellen, insbesondere Sinusvollwellen, gebildet, die in Abhängigkeit von der Bitinformation mit der positiven oder negativen Halbwelle beginnen. Sie werden zum Codieren und Decodieren eines Aufzeichnungsträgers, insbesondere Videobandes, benutzt, auf dem eine Basisinformation mit einem vorgegebenen Basisfrequenzbereich übertragen wird. Die Frequenz der Grundschwingung der Vollwelle liegt außerhalb des Basisfrequenzbereichs. Insbesondere besteht jedes Bitsignal aus nur einer Sinusvollwelle. Ein Bitsignalgeber (1) weist ein sinus-Filter (16) auf, dem über eine gesteuerte Schaltvorrichtung (11) ein aus zwei gegensinnigen Rechteck-Impulsen bestehender Doppelimpuls zuführbar ist. Ein Bitsignalempfänger (2) weist zwei Komparatoren (K1, K2) zum Feststellen der positiven und der negativen Halbwellen der Sinusvollwelle und eine Auswerteschaltung (3) auf, die aus der Reihenfolge des Ansprechens der Komparatoren die Bitinformation gewinnt. Insbesondere kann ein Videoband als Aufzeichnungsträger verwendet werden. Hiermit wird eine Übertragung mit keinen oder sehr geringen Störungen erreicht.

Fig. 1

## Verfahren zur Übertragung von Bitsignalen, Bitsignalgeber und Bitsignalempfänger zur Durchführung des Verfahrens sowie nach dem Verfahren bespielter Aufzeichnungsträger

Die Erfindung bezieht sich auf ein Verfahren zum Übertragen von Bitsignalen, die mit zeitlichem Abstand aufeinanderfolgen, zum Codieren und Decodieren eines Aufzeichnungsträgers, insbesondere Videobandes, mit mindestens einer Spur für eine Audio- und/oder Videobasisinformation, die in einem vorgegebenen Basisfrequenzbereich übertragen wird, sowie auf einen Bitsignalgeber und einen Bitsignalempfänger zur Durchführung dieses Verfahrens und auf einen Aufzeichnungsträger, der nach diesem Übertragungsverfahren bespielt ist.

Bei einem bekannten Verfahren dieser Art (DE-OS 33 09 029) dienen die Bitsignale dazu, auf einem Videoband einen Kennzeichnungscode aufzuzeichnen, mit dessen Hilfe es möglich ist, das jeweilige Videobild zu identifizieren. Dieser auch als "Zeitcode" bezeichnete Kennzeichnungscode wird auf der Synchronspur in pulspolaritätsmodulierter Form aufgezeichnet, also je nach Bitinformation als positiver oder negativer magnetischer Impuls. Die Folgefrequenz liegt zwischen 20 und 30 Hz. Ein starkes Übersprechen auf die Nutzsignalspur wird in Kauf genommen. Außerdem tritt dann, wenn mehrere gleichnamige Impulse aufeinander folgen, eine Verschiebung des Gleichspannungsmittelwertes ein, was zu Störungen führen kann.
Da die normalerweise auf der Synchronspur aufgezeichneten
Synchronimpulse sämtlich die gleiche Polarität haben,
kann das mit den pulspolaritätsmodulierten Bitsignalen
codierte Videoband nur auf speziell angepaßten Geräten
abgespielt werden, nicht aber auf den bereits auf dem
Markt befindlichen Geräten normaler Bauart.

Es ist auch schon bekannt, Bitsignale durch Sinusvollwellen zu bilden, die in Abhängigkeit von der Bitinformation mit der positiven oder negativen Halbwelle beginnen. Sie werden als Meß- oder Rechendaten über ein eigenes Übertragungssystem geleitet (US-PS 32 44 986) oder
einer Trägerwelle mit der gleichen Frequenz überlagert
(DE-PS 25 31 837).

Der Erfindung liegt die Aufgabe zugrunde, ein Verfahren
der eingangs beschriebenen Art anzugeben, bei dem die
während der Übertragung von den Bitsignalen ausgehenden
Störungen wesentlich geringer gehalten werden können.

Diese Aufgabe wird erfindungsgemäß dadurch gelöst, daß
jedes Bitsignal durch eine geringe Zahl von Vollwellen
gebildet ist, die in Abhängigkeit von der Bitinformation mit der positiven oder negativen Halbwelle beginnen,
und daß die Frequenz der Grundschwingung der Vollwelle
außerhalb des Basisfrequenzbereichs liegt.

Bei jedem dieser Bitsignale ist das Zeitintegral gleich
0. Es ist daher keine Störung im Bereich der Folgefrequenz zu erwarten. Es gibt keine Verschiebung des Gleichspannungsmittelwerts. Störungswirksam ist in erster
Linie die Grundschwingung der Vollwelle. Diese Frequenz
kann in einem konkreten Fall jeweils so gewählt werden,
daß sie die Nutz-Frequenzbereiche anderer Systeme, in die hinein ein Übersprechen erfolgen könnte, wenig oder überhaupt nicht stört. Bei bekanntem Frequenzbereich der Basisinformation läßt sich die Frequenz der Vollwelle außerhalb dieses Frequenzbereichs festlegen.

Die durch die Vollwelle gebildeten Bitsignale lassen sich auch leicht und insbesondere mittels eines Mikroprozessors auswerten. Denn bei dieser Ermittlung der Bitinformation braucht lediglich geprüft zu werden, ob zuerst eine positive oder negative Halbwelle auftritt. Hierbei ergibt sich auch eine Redundanz, weil mit Hilfe der jeweils zweiten Halbwelle die Information der ersten Halbwelle bestätigt werden kann.

Vorzugsweise sind die Vollwellen keine Rechteckwellen sondern Sinusvollwellen. Es können dann weder Subharmonische noch Harmonische auftreten. Da die Frequenz der Sinusvollwelle außerhalb des Basisfrequenzbereichs liegt, ergeben sich überhaupt keine störungswirksamen Frequenzen.

Am günstigsten ist es, wenn jedes Bitsignal aus nur einer Vollwelle, insbesondere Sinusvollwelle, besteht. Dieses Bitsignal hat eine sehr geringe Energie, reicht aber zur Informationsübertragung vollständig aus.

Wenn die Übertragung gleichzeitig mit einer Audiosignalübertragung erfolgt, sollte die Frequenz der Vollwelle oberhalb der Hörschwelle liegen.

Bei einem bevorzugten Ausführungsbeispiel ist dafür gesorgt, daß die Bitsignale jeweils zum Bild- oder Halbbildwechsel auf einer Spur eines Videobandes aufgezeichnet werden und blockweise einen Kennzeichnungscode bilden. Hier läßt sich die Frequenz der Vollwelle so wählen, daß weder der Audio-Frequenzbereich noch der Video-Frequenzbereich gestört werden. Durch den Kennzeichnungscode läßt sich die jeweils vorliegende Länge des Videobandes

bzw. das jeweils vorhandene Videobild genau kennzeichnen. Da die Folgefrequenz der Bitsignale keine Störungen hervorruft, kann sie auch größer als 20 bis 30 Hz sein, beispielsweise dem Halbbildwechsel zugeordnet werden und 50 Hz betragen. Dies erlaubt es, bei einem Zeitcode mit Sekundenblöcken eine umfangreichere Information zu übertragen.

Mit Vorteil werden die Bitsignale auf der Synchronspur eines Videobandes aufgezeichnet und es werden jeweils die Halbwellen gleicher Polarität als Synchronsignale ausgewertet. Dadurch, daß die Vollwellen eine im Vergleich zur Bildwechselfrequenz sehr große Frequenz haben, spielt der zeitliche Unterschied zwischen erster und zweiter Halbwelle für die Synchronisierung keine wesentliche Rolle. Daher können solche mit einem Kennzeichnungscode versehene Videobänder auch auf den bisher üblichen Videogeräten abgespielt werden, wenn auf eine Auswertung des Codes verzichtet wird.

Eine andere vorteilhafte Möglichkeit besteht darin, daß die Bitsignale auf einer von zwei benachbarten Audiospuren eines Videobandes aufgezeichnet werden, von denen die andere ein Audiosignal führt. Es können daher die üblichen für Stereo-Betrieb ausgelegten Videobänder mit einem Kennzeichnungscode versehen werden, wenn eine Mono-Tonwiedergabe ausreicht. Obwohl die beiden Tonspuren so dicht nebeneinander angeordnet sind, daß ein Übersprechen auftritt, können Audiofrequenz und Vollwellenfrequenz im ausreichenden Abstand voneinander gehalten werden.

Besonders günstig ist es, wenn die Bitsignale gemeinsam mit einem Audiosignal auf einer Audio-Schrägspur im Sicherheitsabstand zwischen den Video-Schrägspuren eines Videobandes aufgezeichnet werden. Eine solche Mischaufzeichnung ist möglich, weil der der Audio-Schrägspur nachgeordnete Audiokanal regelmäßig für HiFi-Bedingungen ausgelegt ist und daher eine sehr große Bandbreite hat.

Insbesondere kann der Audiokanal eine über 18 kHz hinausgehende Bandbreite haben und die Frequenz der Vollwelle größer als 18 kHz sein. Als besonders günstig hat sich eine Frequenz der Vollwelle von etwa 20 kHz erwiesen. Diese Frequenz liegt ausreichend weit über der Hörschwelle, wird aber von den üblichen HiFi--Verstärkern mit Sicherheit erfaßt.

Ein Bitsignalgeber zur Durchführung des Verfahrens ist dadurch gekennzeichnet, daß einem Sinus-Filter über eine gesteuerte Schaltvorrichtung zur Abgabe eines Bitsignals ein aus zwei gegensinnigen Rechteckimpulsen bestehender Doppelimpuls mit von der Bitinformation abhängiger Aufeinanderfolge der Rechteckimpulse zuführbar ist. Man gewinnt daher die Sinusvollwelle aus einem Rechteck-Doppelimpuls, der auf einfache Weise mit Hilfe eines Mikroprozessors oder einer logischen Schaltung erzeugbar ist.

Hierbei ist es günstig, daß die gesteuerte Schaltvorrichtung drei Schaltwege aufweist, über die dem Sinus-Filter eine mittlere Spannung und zur Abgabe eines Bitsignals jeweils für eine vorbestimmte Dauer nacheinander eine höhere Spannung und eine niedrigere Spannung oder umgekehrt zuführbar ist, und daß dem Sinus-Filter ein Entkopplungskondensator vorgeschaltet ist. Eine solche Schaltvorrichtung läßt sich besonders einfach mit einem Mikroprozessor ansteuern.

Der Ausgang des Sinus-Filters kann bei einer Mischstelle mit einer Zuleitung für Audiosignale verbunden sein. Hinter der Mischstelle kann dann das aus Audiosignal und Bitsignalen bestehende Mischsignal abgenommen und übertragen werden.

Hierbei kann die Audiosignal-Zuleitung mit einem Tiefpass-Filter versehen sein, der Frequenzen im Bereich
der Sinusvollwellen herausfiltert. Damit ist gewährleistet, daß die Frequenz der Sinusvollwelle außerhalb
des Audiofrequenzbereichs liegt.

Ein Bitsignalempfänger zur Durchführung des Verfahrens
ist erfindungsgemäß gekennzeichnet durch zwei Komparatoren zum Feststellen der positiven und der negativen
Halbwelle der Vollwelle und durch eine Auswerteschaltung, die aus der Reihenfolge des Ansprechens der Komparatoren die Bitinformation gewinnt. Die Phasenlage
der Halbwelle läßt sich mit Hilfe der Komparatoren auf
einfache Weise feststellen. Ihr Ausgangssignal ist mit
einer logischen Schaltung oder einem Mikroprozessor
leicht auswertbar.

Es empfiehlt sich, daß die Auswerteschaltung zwei je
einer Bitinformation zugeordnete Flipflops, die je von
einem Komparator ansteuerbar sind und dann einen Impuls
vorgegebener Dauer erzeugen, und einen logischen Vergleicher aufweist, der die Bitinformation nur bestätigt,
wenn das jeweils andere Flipflop innerhalb der genannten
Impulsdauer anspricht. Auf diese Weise wird jedes Bitsignal genau erkannt. Störeinstrahlungen mit der Frequenz
der Vollwelle werden als Nicht-Information verworfen.

Ferner kann den Komparatoren ein Hochpass-Filter für
die Abtrennung der Vollwellen vom Audiosignal vorgeschaltet sein. Dies ist die einfachste Art, die beiden
gemischten Signale wieder zu trennen.

Ein Aufzeichnungsträger, der nach dem Übertragungsverfahren mit Bitsignalen zusätzlich zu mindestens einer Basisinformation bespielt ist, insbesondere ein Videoband,
hat den Vorteil, daß zusätzlich zu einer Basisinforma-

tion, also beispielsweise einer Audio- und/oder Video-Information, eine weitere Information vorgesehen ist, die beim Abspielen die Basisinformation nicht stört.

Hierbei sollten die Bitsignale jeweils einem Bild- oder Halbbild des Videobandes räumlich zugeordnet sein und blockweise einen Kennzeichnungscode bilden. Mit Hilfe eines solchen "Zeitcode" kann ein bestimmtes Videobild schnell aufgefunden oder das Schneiden von Videobändern erleichtert werden.

Die Erfindung wird nachstehend anhand eines in der Zeichnung dargestellten Ausführungsbeispiels näher erläutert. Es zeigen:

Fig.  1 eine schematische Darstellung eines Bitsignalgebers und Bitsignalempfängers,

Fig.  2 eine Frequenzbereichsdarstellung,

Fig.  3 eine Ausführungsform eines Videobandes,

Fig.  4 den Spannungsverlauf am Testpunkt 1,

Fig.  5 den Spannungsverlauf am Testpunkt 2,

Fig.  6 eine Darstellung eines Codeblocks,

Fig.  7 den Spannungsverlauf am Testpunkt 3,

Fig.  8 den Spannungsverlauf am Testpunkt 4 und

Fig.  9 einige im Bitsignalempfänger auftretende Spannungen.

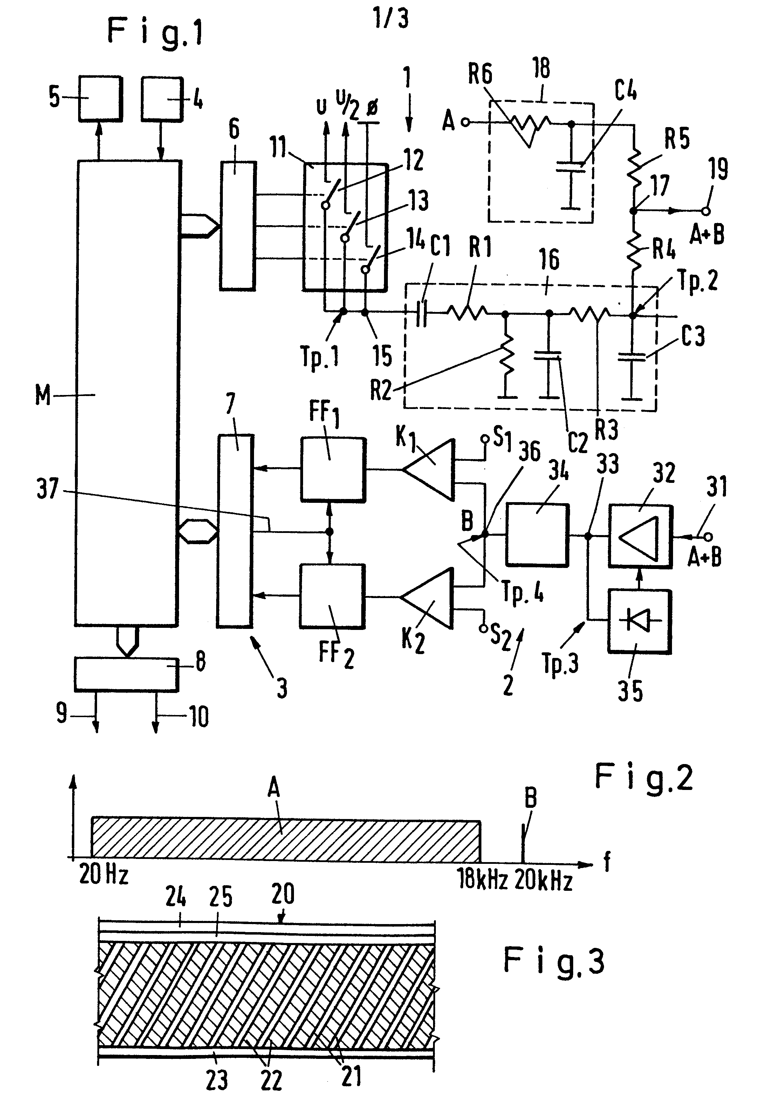

Fig. 1 zeigt einen Bitsignalgeber 1 und einen mit einer Auswerteschaltung 3 versehenen Bitsignalempfänger 2, die beide von einem Mikroprozessor M gesteuert werden. Der Mikroprozessor weist in üblicher Weise einen Rechner (CPU), einen Taktimpulsgenerator, einen Festwertspeichern, einen variablen Speicher, einen Datenbus, einen Adressbus und einen Kontrollbus auf. Er besitzt eine Eingabevorrichtung 4, beispielsweise eine Tastatur, und eine Anzeigevorrichtung 5, beispielsweise ein Display. Er steht über eine Schnittstelle 6 mit dem Bitsignalgeber 1, über eine Schnittstelle 7 mit dem Bitsignalempfänger 2 und über eine Schnittstelle 8 mit einem zu einem Video-Wiedergabegerät führenden Steuerkanal 9 und einem zu einem Video-Aufnahmegerät führenden Steuerkanal 10 in Verbindung. Die Steuerkanäle können durch elektrische Verbindungen, durch Infrarotstrecken o. dgl., gebildet sein.

Der Bitsignalgeber 1 weist eine Schaltvorrichtung 11 mit drei Schaltwegen 12, 13 und 14 auf, die jeweils vom Mikroprozessor M her steuerbar sind. Eine den Testpunkt Tp. 1 bildende Leitung 15 kann daher wahlweise mit der Spannung U, der halben Spannung U/2 oder dem Nullpunkt 0 der Spannung verbunden werden. Die Leitung 15 führt zu dem Eingang eines Sinus-Filters 16, der einen Kopplungskondensator C1, einen Längswiderstand R1, einen Querwiderstand R2, einen Querkondensator C2, einen Längswiderstand R3 und einen Querkondensator C3 aufweist. Am Ausgang, der dem Testpunkt Tp. 2 entspricht, werden daher Bitsignale B in der Form von Sinusvollwellen abgegeben. Sie werden über einen Summationswiderstand R4 an eine Mischstelle 17 geführt, der über eine Zuleitung mit einem Summationswiderstand R5 ein Audiosignal A zugeführt wird, nachdem dieses zuvor einen Tiefpass-Filter 18 mit einem Längswiderstand R6 und einem Querkondensator C4 durchlaufen hat. Am Ausgang 19 steht daher ein Mischsignal A + B, bestehend aus Audio- und Bitsignalen, zur Verfügung.

Fig. 2 veranschaulicht, daß der Frequenzbereich des Audiosignals A sich zwischen 20 Hz und 18 kHz erstreckt, während die Frequenz des Sinusvollwelle des Bitsignals B 20 kHz beträgt. Dementsprechend wird die Schaltvorrichtung 11 so gesteuert und ist das Sinus-Filter 16 so ausgelegt, daß am Ausgang nur eine Sinusvollwelle mit 20 kHz austritt. Und der Tiefpass-Filter 18 ist so ausgelegt, daß Frequenzen oberhalb 18 kHz ausgefiltert werden. Da die Hörschwelle bei 18 kHz und darunter liegt, ist diese Begrenzung für die Audioübertragung ohne Bedeutung.

In Fig. 3 ist ein Abschnitt eines Videobandes 20 veranschaulicht, das Schrägspuren 21 für die Aufzeichnung der Videosignale und in deren Sicherheitsabstand Spuren 22 aufweist, die im bekannten Fall als Audiospuren für HiFi-Übertragung dienen, im vorliegenden Fall aber die Aufzeichnung des Mischsignals aus A + B aufnehmen. Ferner sind eine Synchronspur 23 und zwei Audiospuren 24 und 25 vorgesehen.

Das Bitsignal B kann auch direkt auf die Synchronspur 24 aufgezeichnet werden. In diesem Fall kann das Band in einem handelsüblichen Wiedergabegerät abgespielt werden, weil die jeweils eine Halbwelle der Sinusvollwelle als Synchronsignal erfaßt wird.

Es kann auch die eine Audiospur 25 benutzt werden, um die Bitsignale B aufzuzeichnen. Die enge Nachbarschaft zur anderen Audiospur 28 ist unschädlich.

Bei der Wiedergabe wird das auf dem Videoband 20 aufgezeichnete, kombinierte Signal A + B am Eingang 31 des Bitsignalempfängers 2 aufgenommen und in einem mittels Regler 35 geregelten Verstärker 32 verstärkt. Aus dem am Verstärkerausgang 33 (Tp. 3) anstehenden Signal wird mit Hilfe eines Hochpass-Filters 34 das Bitsignal B ausgefiltert und steht am Filterausgang 36 (Testpunkt Tp. 4) zur Verfügung. Es wird je einem Eingang zweier Komparatoren K1 und K2 zugeführt. Deren andere Eingänge werden je mit einem Grenzwert $S_1$ bzw. $S_2$ versorgt. Wenn das Bitsignal B den Grenzwert $S_1$ überschreitet, wird ein Signal an das Flipflop FF1 abgegeben, und beim Unterschreiten des Grenzwerts $S_2$ ein Signal an das Flipflop FF2. Die Ausgänge der Flipflops werden der Schnittstelle 7 zugeführt. Von dort erhalten die Flipflops über die Leitung 37 auch ein Rückstellsignal.

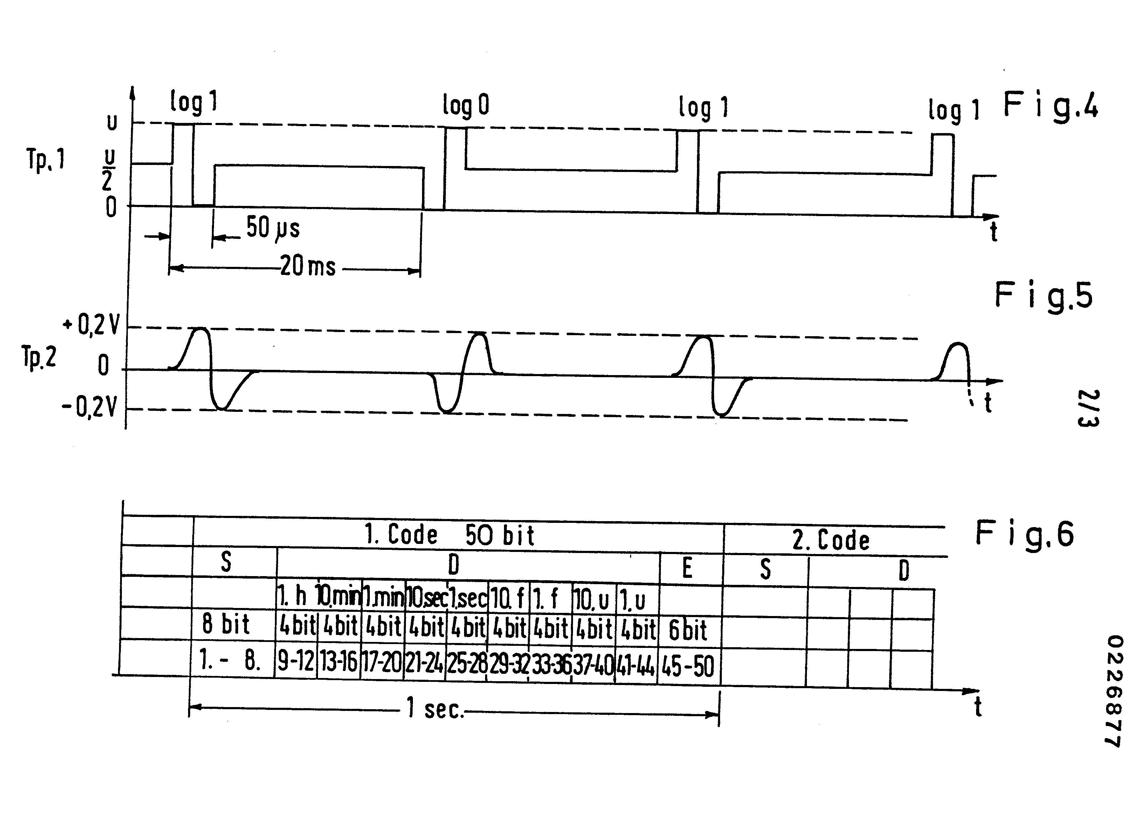

Normalerweise ist der Schaltweg 13 geschlossen, so daß am Testpunkt Tp. 1 die Spannung U/2 anliegt (Fig. 4). Wenn ein Bitsignal abgegeben werden soll, was alle 20 ms der Fall ist, wird der Schaltweg 13 geöffnet und kurzzeitig zunächst der Schaltweg 12 und dann der Schaltweg 14 oder umgekehrt geschlossen. Im ersten Fall ergibt sich ein Rechteck-Wechselimpuls mit der Dauer von 50 µs, der die Information log 1 enthält. Im umgekehrten Fall ergibt sich die Information log 0.

Wegen des Sinus-Filters 16 mit dem Entkopplungskondensator C1 ergibt sich am Testpunkt Tp. 2 eine Folge von Sinusvollwellen, die je nach Informationsgehalt mit einer positiven Halbwelle oder einer negativen Halbwelle beginnen.

Auf diese Weise wird jeweils zu Beginn eines Halbbildes ein Bitsignal auf das Videoband 20 aufgezeichnet. Blöcke von 50 Bit ergeben jeweils einen Code, der in an sich bekannter Weise als "timecode" verwendet werden kann. Die Übertragung jedes Codes beträgt, wie Fig. 6 zeigt, jeweils eine Sekunde und umfaßt Daten D, nämlich zumeist mit Zehner- und Einerstellen Zeitangaben über Stunde (h), Minute (min) und Sekunde (sec), sowie Klassifizierungsangaben (frame f, user code u), sowie ferner Startbits S und End- oder Prüfbits E. Mit Hilfe dieser Daten
ist sowohl das Band, die jeweilige Stelle des Bandes
als auch die Laufrichtung zu identifizieren.

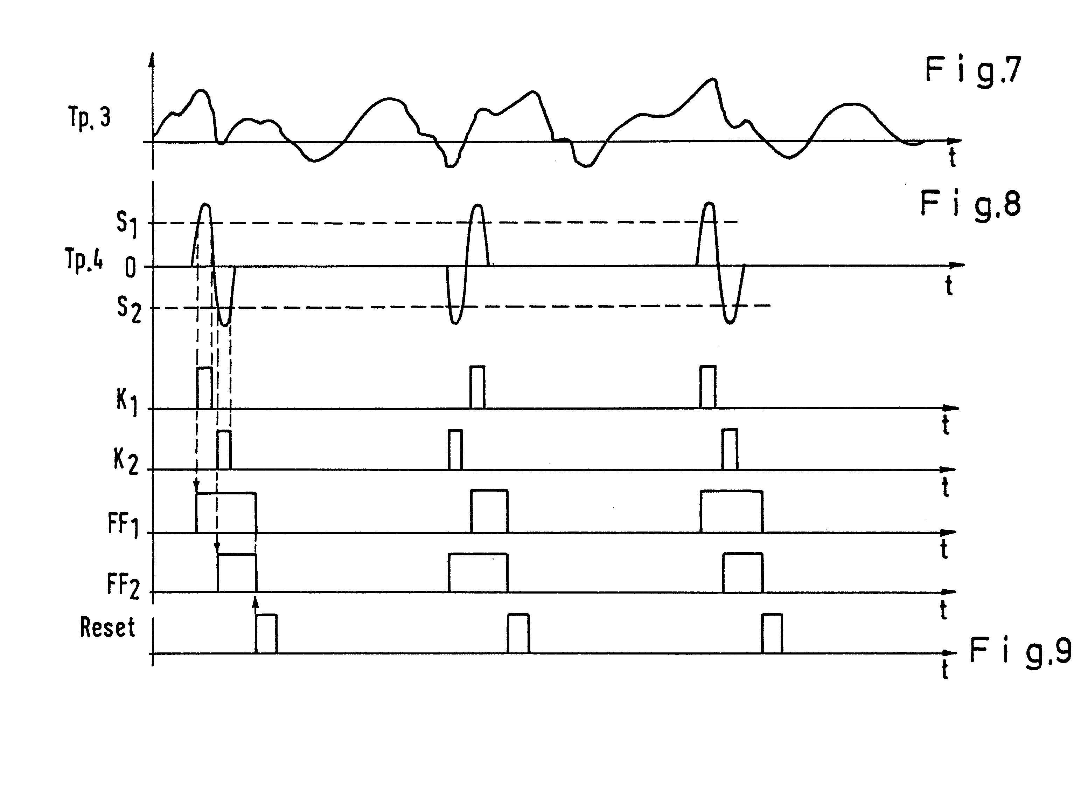

Fig. 7 zeigt das Mischsignal A + B, das beim Abspielen
des Videobandes 20 am Eingang 31 bzw. am Testpunkt Tp. 3
auftritt. Mit Hilfe des Hochpass-Filters 34 wird das
Bitsignal B am Testpunkt Tp. 4 (Fig. 8) wiedergewonnen
und in den Komparatoren K1 bzw. K2 mit den Grenzwerten $S_1$
und $S_2$ verglichen. Beim Überschreiten bzw. Unterschreiten dieser Grenzwerte geben die Komparatoren die in
Fig. 9 in der Zeile K1 und K2 veranschaulichten Impulse
ab. Hierdurch werden die Flipflops FF1 und FF2 angestossen. Ein Reset-Signal wird über die Leitung 38 abgegeben,
wenn eine vorbestimmte Laufzeit des jeweils zuerst ansprechenden Flipflop abgelaufen ist. Hierdurch wird
auch das zweite Flipflop zurückgestellt. Die logische
Auswertung erfolgt derart, daß vom als logischer Vergleicher arbeitenden Mikroprozessor M geprüft wird, welches
Flipflop zuerst angesprochen hat und ob das zweite Flipflop innerhalb des durch das erste Flipflop vorgegebenen
Zeitfensters ebenfalls anspricht. Unter dieser Voraussetzung wird eine logische 1 bestätigt, wenn das Flipflop
FF1 zuerst angesprochen hat, und eine logische O, wenn
das Flipflop FF2 zuerst angesprochen hat.

Die Sinusvollwellen-Bitsignale eignen sich besonders,
wie die Ausführungsbeispiele zeigen, für die Kennzeichnung von Videobändern. Sie sind aber auch für viele
andere Übertragungszwecke von Vorteil, beispielsweise
dann, wenn über einen Kanal Bitsignale und Audiosignale
oder bei der Datenfernübertragung mehrere Bitinformationen mit unterschiedlicher Frequenz übertragen werden
sollen oder überhaupt ein Übersprechen auf benachbarte
Systeme zu befürchten ist.

- 1 -

Patentansprüche

1. Verfahren zum Übertragen von Bitsignalen, die mit zeitlichem Abstand aufeinander folgen, zum Kodieren und Dekodieren eines Aufzeichnungsträgers, insbesondere Videobandes, mit mindestens einer Spur für eine Audio- und/oder Video-Basisinformation, die in einem vorgegebenen Basisfrequenzbereich übertragen wird, dadurch gekennzeichnet, daß jedes Bitsignal durch eine geringe Zahl von Vollwellen gebildet ist, die in Abhängigkeit von der Bitinformation mit der positiven oder negativen Halbwelle beginnen, und daß die Frequenz der Grundschwingung der Vollwelle außerhalb des Basisfrequenzbereichs liegt.

2. Verfahren nach Anspruch 1, dadurch gekennzeichnet, daß die Vollwellen Sinusvollwellen sind.

3. Verfahren nach Anspruch 2, dadurch gekennzeichnet, daß jedes Bitsignal aus nur einer Vollwelle besteht.

4. Verfahren nach einem der Ansprüche 1 bis 3, dadurch gekennzeichnet, daß die Übertragung gleichzeitig mit einer Audiosignalübertragung erfolgt und die Frequenz der Vollwelle oberhalb der Hörschwelle liegt.

5. Verfahren nach einem der Ansprüche 1 bis 4, dadurch gekennzeichnet, daß die Bitsignale jeweils zum Bild- oder Halbbildwechsel auf einer Spur eines Videobandes aufgezeichnet werden und blockweise einen Kennzeichnungscode bilden.

6. Verfahren nach einem der Ansprüche 1 bis 5, dadurch gekennzeichnet, daß die Bitsignale auf der Synchronspur eines Videobandes aufgezeichnet werden und jeweils die Halbwellen gleicher Polarität als Synchronsignale ausgewertet werden.

7. Verfahren nach einem der Ansprüche 1 bis 5, dadurch gekennzeichnet, daß die Bitsignale auf einer von zwei benachbarten Audiospuren eines Videobandes aufgezeichnet werden, von denen die andere ein Audiosignal führt.

8. Verfahren nach einem der Ansprüche 1 bis 5, dadurch gekennzeichnet, daß die Bitsignale gemeinsam mit einem Audiosignal auf einer Audiospur aufgezeichnet werden.

9. Verfahren nach Anspruch 8, dadurch gekennzeichnet, daß die gemeinsame Aufzeichnung auf einer Audio-Schrägspur im Sicherheitsabstand zwischen den Video-Schrägspuren eines Videobandes erfolgt.

10. Verfahren nach Anspruch 8 oder 9, dadurch gekennzeichnet, daß der Audiokanal eine über 18 kHz hinausgehende Bandbreite hat und die Frequenz der Sinusvollwelle größer als 18 kHz ist.

11. Verfahren nach Ansprüchen 1 bis 10, dadurch gekennzeichnet, daß die Frequenz der Sinusvollwelle etwa 20 kHz beträgt.

12. Bitsignalgeber zur Durchführung des Verfahrens nach einem der Ansprüche 2 bis 11, dadurch gekennzeichnet, daß einem Sinus-Filter (16) über eine gesteuerte Schaltvorrichtung (11) zur Abgabe eines Bitsignals (B) ein aus zwei gegensinnigen Rechteckimpulsen bestehender Doppelimpuls mit von der Bitinformation abhängiger Aufeinanderfolge der Rechteckimpulse zuführbar ist.

13. Bitsignalgeber nach Anspruch 12, dadurch gekennzeichnet, daß die gesteuerte Schaltvorrichtung (11) drei Schaltwege (12, 13, 14) aufweist, über die dem Sinus-Filter (16) eine mittlere Spannung (U/2) und zur Abgabe eines Bitsignals (B) jeweils für eine vorbestimmte Dauer nacheinander eine höhere Spannung (U) und eine niedrigere Spannung (0) oder umgekehrt zuführbar ist, und daß dem Sinus-Filter ein Entkopplungskondensator (1) vorgeschaltet ist.

14. Bitsignalgeber nach Anspruch 12 oder 13, dadurch gekennzeichnet, daß der Ausgang des Sinus-Filters - (16) an einer Mischstelle (17) mit einer Zuleitung für Audiosignale (A) verbunden ist.

15. Bitsignalgeber nach einem der Ansprüche 12 bis 14, dadurch gekennzeichnet, daß die Audiosignal-Zuleitung mit einem Tiefpass-Filter (18) versehen ist, der Frequenzen im Bereich der Frequenz der Sinusvollwellen herausfiltert.

16. Bitsignalempfänger zur Durchführung des Verfahrens nach einem der Ansprüche 1 bis 11, gekennzeichnet durch zwei Komparatoren (K1, K2) zum Feststellen der positiven und der negativen Halbwelle der Vollwelle und durch eine Auswerteschaltung (3), die aus der Reihenfolge des Ansprechens der Komparatoren die Bitinformation gewinnt.

17. Bitsignalempfänger nach Anspruch 16, dadurch gekennzeichnet, daß die Auswerteschaltung (3) zwei je einer Bitinformation zugeordnete Flipflops (FF1, FF2), die je von einem Komparator (K1, K2) ansteuerbar sind und dann einen Impuls vorgegebener Dauer erzeugen, und einen logischen Vergleicher (M) aufweist, der die Bitinformation nur bestätigt, wenn das jeweils andere Flipflop innerhalb der genannten Impulsdauer anspricht.

18. Bitsignalempfänger nach Anspruch 16 oder 17, dadurch gekennzeichnet, daß den Komparatoren (K1, K2) ein Hochpass-Filter (34) für die Abtrennung der Sinusvollwellen vom Audiosignal (A) vorgeschaltet ist.

19. Aufzeichnungsträger, der nach dem Übertragungsverfahren eines der Ansprüche 1 bis 11 mit Bitsignalen (B) zusätzlich zu mindestens einer Basisinformation bespielt ist, insbesondere Videoband (20, 23, 27).

20. Aufzeichnungsträger nach Anspruch 19, dadurch gekennzeichnet, daß die Bitsignale (B) jeweils einem Bild oder Halbbild des Videobandes (20, 23, 27) räumlich zugeordnet sind und blockweise einen Kennzeichnungscode bilden.

Fig.1

Fig.2

Fig.3

0226877

1/3

0226877

2/3

Fig.4

Fig.5

Fig.6

Tp.1

u
$\frac{u}{2}$
0

log 1    log 1    log 0    log 1

50 µs

20 ms

t

Tp.2

+0,2 V
0
−0,2 V

t

1. Code  50 bit

| S | D | | | | E | S | 2. Code | D |
|---|---|---|---|---|---|---|---|---|
| 8 bit | 1. h | 10 min | 1 min | 10 sec | 1 sec | 10. f | 1. f | 10. u | 1. u |
| | 4 bit | 4 bit | 4 bit | 4 bit | 4 bit | 4 bit | 4 bit | 6 bit |
| 1. – 8. | 9-12 | 13-16 | 17-20 | 21-24 | 25-28 | 29-32 | 33-36 | 37-40 | 41-44 | 45-50 |

1 sec.

t

Fig.7

Fig.8

Fig.9

3/3

0226877